# FASCICULE DE BREVET EUROPEEN

(11) **EP 3 354 997 B1**
(45) Date de publication et mention de la délivrance du brevet: **10.07.2019**
(21) Numéro de dépôt: 18151033.0
(22) Date de dépôt: 10.01.2018
(51) Int. Cl.: F24H 1/28, F24H 1/36, F24H 8/00, F24H 9/00, F28F 13/08, F28D 7/10, F28D 7/12, F28D 21/00, F28F 1/08

(54) **CHAUDIERE A RENDEMENT AMELIORE**
HEIZKESSEL MIT VERBESSERTER LEISTUNG
BOILER WITH IMPROVED EFFICIENCY

(30) Priorité: 31.01.2017 FR 1750813
(43) Date de publication de la demande: 01.08.2018
(73) Titulaire: Frisquet SA, 77100 Meaux (FR)
(72) Inventeur: PÉCHOUX, Christophe, 77450 CONDÉ SAINTE LIBIAIRE (FR)
(74) Mandataire: Gauchet, Fabien Roland

(56) Documents cités:
- EP-A1- 2 012 073
- FR-A- 1 559 461
- US-A- 5 022 379

## Description

### DOMAINE TECHNIQUE DE L'INVENTION

L'invention se rapporte au domaine des chaudières à condensation destinées à des appareils et installations de chauffage d'eau notamment destinées au chauffage domestique.

### ETAT DE LA TECHNIQUE ANTERIEURE

On connait le principe général de telles chaudières telles que décrites par exemple dans le brevet européen EP 098 1024 qui décrit une chaudière comprenant une chemise d'eau raccordée à une conduite d'aller et une conduite de retour, une chambre de combustion située dans la partie supérieure de la chemise d'eau, un brûleur lié à la chambre de combustion et au moins un tube de chauffe traversant depuis le brûleur, la chemise d'eau, communique avec une conduite de fumées et comprend une pluralité d'éléments directeurs de fumées en forme de pots. Ce type de chaudière présente un problème au niveau des éléments, ici des pots, les plus proches du brûleur qui sont fortement exposés à la température élevée des fumées de combustion et au rayonnement du brûleur ; ceci provoque rapidement leur dégradation et/ou leur déformation.

De plus l'assemblage des pots, empilés les uns au-dessus des autres, est peu fiable. Le document FR 2 889 295 illustre un perfectionnement au niveau de l'empilement des pots par l'assemblage deux à deux desdits pots.

L'art antérieur comprend encore le brevet FR 2 879 726 qui montre une chaudière du type précité dans laquelle l'insert central est constitué par un assemblage de coupelles annulaires présentant une ouverture centrale et une forme spécifique qui favorise les échanges thermiques.

Cependant le rendement de ces chaudières connues est peu satisfaisant. De plus ces chaudières connues posent des problèmes d'encrassement dues aux formes ou arrangements spécifiques mis en oeuvre.

On connaît par ailleurs le brevet EP 2 012 073 B1 qui décrit à la fois un échangeur secondaire thermique de type condenseur et un brûleur ou échangeur principal. L'eau circule et s'échauffe successivement à travers le condenseur puis le corps de chauffe. Cependant une telle chaudière présente un encombrement non négligeable puisque le condenseur et le brûleur sont juxtaposés ; en outre son rendement n'est pas très élevé.

D'autre part, il est connu du document FR 1 559 461 une chaudière selon le préambule de la revendication 1.

### EXPOSE DE L'INVENTION

L'invention vise à remédier aux inconvénients de l'état de la technique et notamment à prévoir une chaudière compacte, fiable, présentant un rendement élevé notamment dû à une condensation améliorée liée à des échanges thermiques très performants.

**Pour** ce faire, il est proposé une chaudière à condensation selon la revendication 1.

Des surfaces d'échanges importantes sont ici prévues.

En outre, ladite zone A permet des échanges thermiques renforcés sur la deuxième virole du corps de chauffe.

Les échanges thermiques sont volontairement favorisés : au niveau de la première extrémité, à proximité de la virole interne du corps de chauffe. Ainsi l'eau est favorablement réchauffée au niveau de sa sortie où les températures sont les plus importantes. Des échanges thermiques renforcés sont en outre créés au niveau de la deuxième extrémité, au niveau de la virole externe de l'insert. Dans cette zone, la température de l'eau qui entre dans la chaudière et celle des fumées qui sortent de la chaudière sont proches.

De façon avantageuse, l'insert comprend une deuxième virole tubulaire coaxiale d'axe XX reliée à la première virole à l'une de leurs extrémités par un fond sensiblement transversal et délimitant entre elles un espace pour la circulation de l'eau.

On réalise ainsi une double circulation de l'eau dans deux espaces annulaires concentriques ; la condensation est optimisée grâce notamment aux deux zones respectivement constituées des surfaces de l'insert et du corps de chauffe.

De façon particulière, l'espace annulaire délimité entre la deuxième virole du corps de chauffe et la première virole de l'insert présente une section transversale variable selon l'axe XX, ledit espace étant apte à la circulation desdites fumées qui passent successivement à travers la zone A sans condensation et la zone B avec condensation. Les fumées circulent avantageusement à contre-courant de l'eau.

Avantageusement, la première et/ou la deuxième viroles de l'insert ainsi que la deuxième virole du corps de chauffe présentent des formes respectives telles que la section transversale de l'espace annulaire qu'elles délimitent est variable selon l'axe XX. Des chicanes sont ainsi formées. Encore une fois cette caractéristique améliore les échanges thermiques entre les fluides mis en jeu. Les formes prévues ne sont pas pour autant difficiles à fabriquer : les viroles peuvent être formées à partir d'un tube obtenu par roulage d'une tôle d'acier, déformé ensuite par hydroformage.

De façon intéressante, le conduit d'alimentation en eau, le conduit de transfert et le conduit de sortie de l'eau sont disposés de telle sorte que l'eau circule successivement dans une zone avec condensation proche de ladite deuxième extrémité du corps de chauffe, puis dans une zone sans condensation proche de la première extrémité dudit corps de chauffe. Une optimisation des échanges thermiques est ici réalisée.

A titre illustratif, la température de l'eau dans le conduit d'alimentation est d'environ 30°C et d'environ 60°C dans le conduit de sortie.

En outre et de façon avantageuse, la température des fumées est comprise entre environ 1600°C et 1800°C à proximité du brûleur.

Par ailleurs au niveau de la deuxième extrémité du corps de chauffe, la température des fumées est proche de la température de l'eau qui entre dans l'insert.

A titre indicatif, la hauteur de l'insert est inférieure d'environ 15% à la hauteur du corps de chauffe.

Concernant plus précisément les matériaux utilisés, le corps de chauffe et/ou l'insert est réalisé en acier ou en un acier inoxydable ou en aluminium. Aucune difficulté particulière n'est à prévoir pour former ces pièces qui sont pourtant de forme spécifique, pas simples.

En outre, l'épaisseur des viroles peut être comprise entre 0.5 et 1 mm. Avantageusement, lesdites viroles de l'insert présentent une surépaisseur dans une zone proche du brûleur. Ceci diminue les risques de défaillances à ce niveau où les parois sont particulièrement sollicitées par les températures importantes (plus de 1000°C) des flammes du brûleur.

Selon une autre caractéristique de l'invention, la condensation dans la zone d'alimentation en eau est opérée entre 30°C et 40°C. C'est dans cette plage de températures que la condensation est optimale. Il est donc très intéressant de pouvoir travailler dans ces températures.

Selon un aspect de l'invention, ladite première extrémité du corps de chauffe correspond au haut c'est-à-dire à une première altitude dite supérieure de la chaudière et ladite deuxième extrémité correspond au bas c'est-à-dire à une altitude dite inférieure de la chaudière.

### BREVE DESCRIPTION DES FIGURES

D'autres caractéristiques et avantages de l'invention ressortiront à la lecture de la description qui suit, donnée à titre d'exemple non limitatif, en référence aux figures annexées, qui illustrent :
- la figure 1, montre le schéma d'une chaudière selon un mode de réalisation de l'invention,
- la figure 2, montre une variante de réalisation d'une chaudière selon l'invention,
- la figure 3, une vue de coupe d'une chaudière selon un mode de réalisation de l'invention,

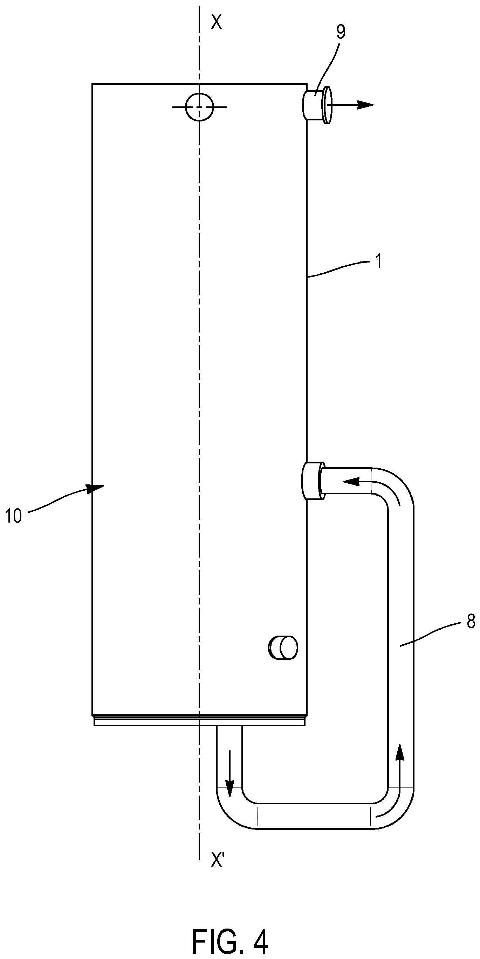

- la figure 4, une vue externe d'une chaudière selon l'invention,

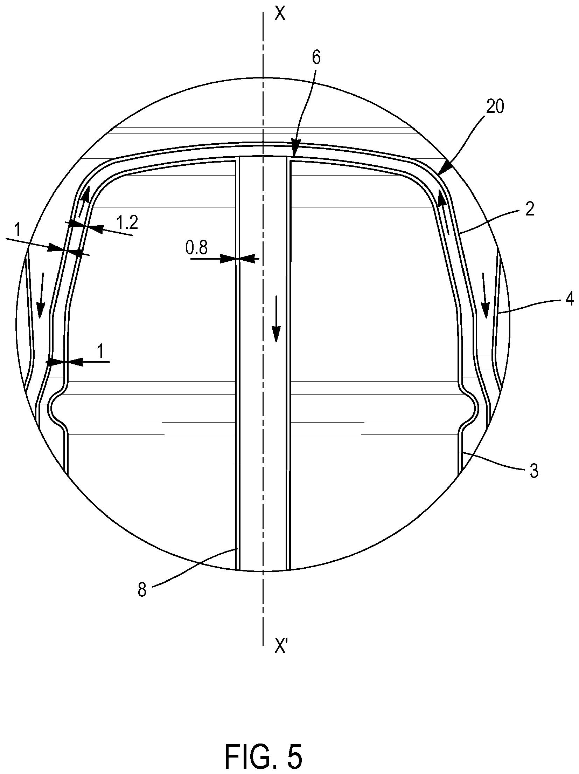

- la figure 5, une coupe longitudinale partielle de l'insert,
- la figure 6, une coupe longitudinale schématique partielle du corps de chauffe et de l'insert dans la zone sans condensation et
- la figure 7, une coupe longitudinale schématique partielle du corps de chauffe et de l'insert dans la zone avec condensation.

Pour plus de clarté, les éléments identiques ou similaires sont repérés par des signes de référence identiques sur l'ensemble des figures.

### DESCRIPTION DETAILLEE D'UN MODE DE REALISATION

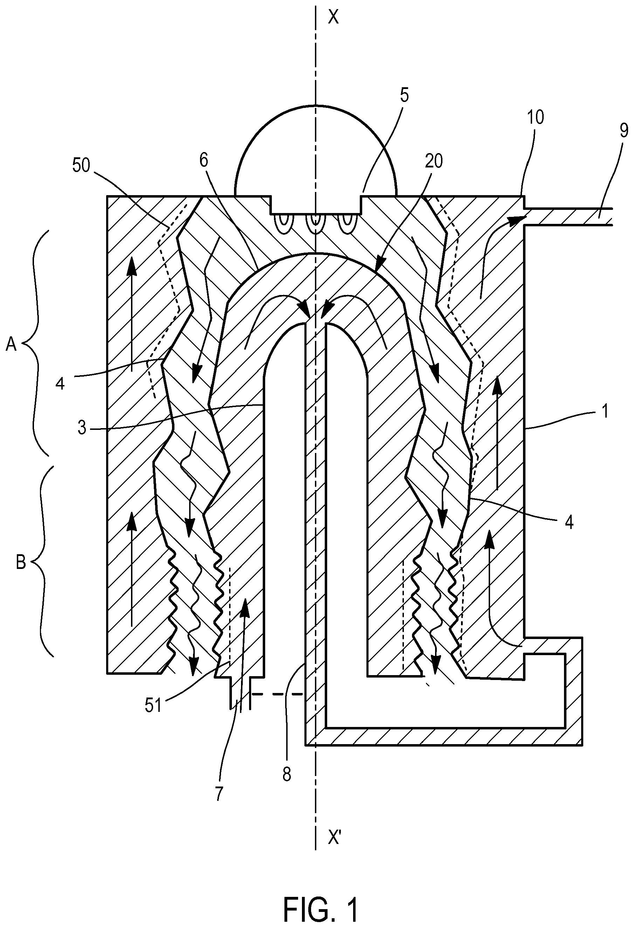

La figure 1 montre de façon schématique les principaux éléments structurels de l'invention qui comprend notamment un corps de chauffe 10 et un insert ou élément central 20.

Le corps de chauffe 10 présente une forme tubulaire d'axe longitudinal XX ; il comprend une première virole tubulaire 1 dite extérieure de section transversale sensiblement constante et circulaire. Une deuxième virole tubulaire 4 dite intérieure est montée coaxiale à la première virole. La première virole 1 et la deuxième virole 4 délimitent entre elles un volume fermé de circulation de l'eau, ou chemise d'eau, comme il sera explicité ci-après. A l'une des extrémités du corps de chauffe est disposé un brûleur 5 ou toute source de chaleur apte à générer des fumées chaudes typiquement de l'ordre de 1700 °C. Cette extrémité est appelée première extrémité du corps de chauffe 10 voire de la chaudière. Une chambre de combustion est délimitée depuis le brûleur 5 à l'intérieur de la deuxième virole 4, donc à proximité de la première extrémité du corps de chauffe 10. L'autre extrémité du corps de chauffe est appelée deuxième extrémité.

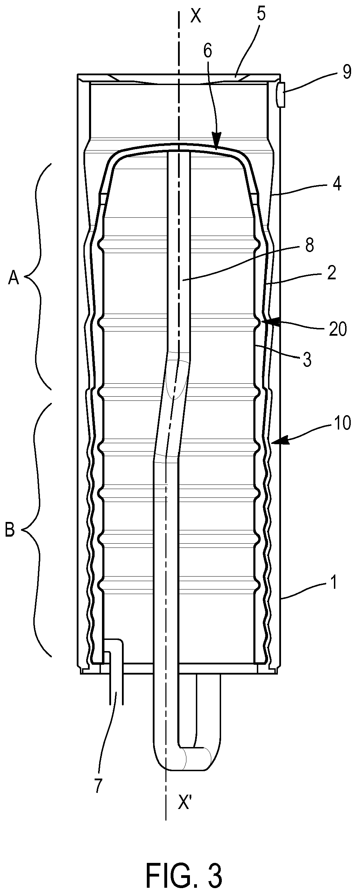

A l'intérieur du corps de chauffe 10 est disposé un insert 20 de forme sensiblement cylindrique, coaxial au corps de chauffe 10. L'insert 20 comprend essentiellement une première virole 2 et une deuxième virole 3 tubulaires et coaxiales d'axe XX. La première 2 et la deuxième 3 viroles délimitent entre elles un espace pour la circulation de l'eau ; la forme de ces deux viroles est telle qu'une sorte de fond 6 permet de relier l'une de leurs extrémités, comme visible sur la figure 1. Le fond 6 est disposé à proximité du brûleur 5. De façon préférée le fond 6 présente une épaisseur plus importante que le reste de la virole. La figure 3 montre une vue détaillée de l'insert 20 au niveau du fond 6.

Un conduit d'alimentation en eau 7 débouche dans la chemise d'eau (délimitée entre la première 2 et la deuxième 3 virole de l'insert 20) préférentiellement au niveau de la deuxième extrémité du corps de chauffe 10. L'eau circule dans la chemise d'eau vers la première extrémité du corps de chauffe 10, c'est-à-dire de bas en haut. Au niveau du fond 6 on prévoit un piquage pour un conduit de transfert 8 apte à transférer l'eau depuis le fond 6 vers l'espace annulaire défini entre la première virole 1 et la deuxième virole 4 du corps de chauffe 10. De préférence le conduit de transfert 8 débouche par son autre extrémité à proximité de la deuxième extrémité du corps de chauffe 10 ; il peut déboucher dans le quart inférieur voire le tiers inférieur du corps de chauffe 10, comme représenté sur les figures illustratives.

L'eau circule alors dans l'espace sensiblement annulaire entre la première virole 1 du corps de chauffe et la deuxième virole 4 du corps de chauffe, depuis la deuxième extrémité du corps de chauffe vers la première extrémité du corps de chauffe c'est-à-dire à contre-courant des fumées générées par le brûleur 5. Les fumées circulent en effet du haut vers le bas de la chaudière tandis que l'eau circule globalement dans le sens inverse. L'eau est ainsi réchauffée et sort de la chaudière par un ou plusieurs conduits de sortie 9 qui débouchent préférentiellement à proximité de la première extrémité du corps de chauffe 10.

Un tel arrangement permet une optimisation des transferts thermiques au sein de la chaudière ; des zones de condensation sont avantageusement créées aptes à favoriser le rendement thermique.

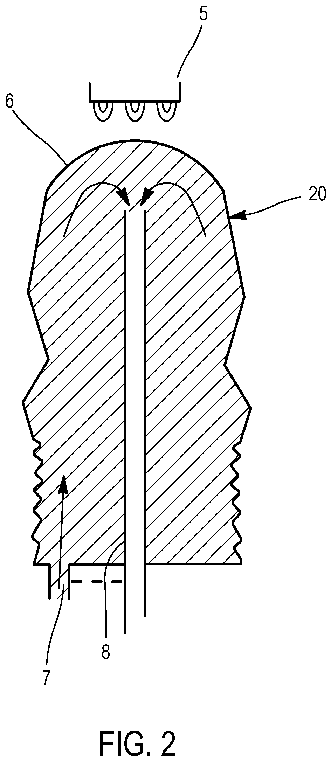

La figure 2 montre une autre structure de l'insert 20. Selon cette structure la virole 2 constitue la paroi pour contenir le fluide à réchauffer, au sein de cet espace le tuyau 8 recueille le fluide au sommet de l'insert.

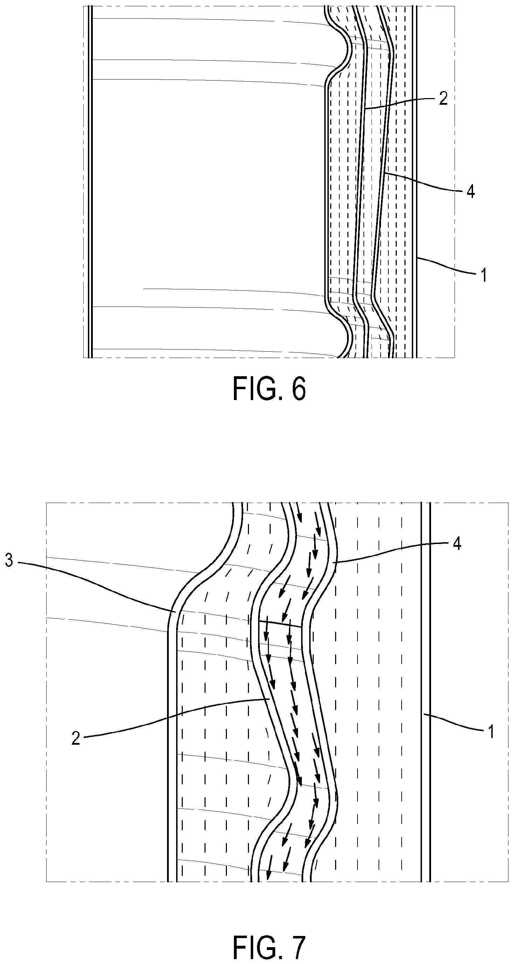

Les figures 6 et 7 montrent plus en détail les sens de circulation des fluides au sein de la chaudière. Par ailleurs les figures 6 et 7 montrent les profils particuliers des viroles 2 et 4. On voit notamment que dans la zone A (selon la figure 6), correspondant à la zone sans condensation, les segments qui forment les viroles 2 et 4 sont peu inclinées vis-à-vis de l'axe XX. De la sorte, les flux sont très peu déviés et l'on crée des échanges renforcés sur le corps de chauffe 10 au niveau de la virole 4, essentiellement à proximité de la première extrémité.

Plus précisément des échanges thermiques importants ou renforcés sont créés au niveau de la virole intérieure 4 du corps de chauffe 10 à proximité du brûleur 5 ; dans cette zone les fumées au contact de la paroi interne de la virole 4 atteignent des températures de plus de 1500 °C. La paroi externe de la virole 4 est donc fortement chauffée à ce niveau. L'eau qui est au contact de la paroi extérieure de la virole 4 à ce niveau, est à environ 60 °C. Il y a ici chauffage de l'eau sans condensation, au niveau de la sortie de l'eau hors de la chaudière. Cet arrangement permet de refroidir les fumées les plus chaudes, au niveau de la première extrémité, près du brûleur 5 sans pour autant trop chauffer l'eau de l'insert. Il n'y a pas de condensation dans cette zone A.

Comme illustré sur la figure 7, au niveau de la première virole 2 de l'insert 20, à proximité de la deuxième extrémité de la chaudière, les échanges thermiques sont favorisés. A ce niveau il y a création d'une condensation associée au chauffage de l'eau dès son entrée dans la chaudière. Ces échanges thermiques sont ici parfaitement contrôlés et renforcés. L'insert 20 est bien irrigué et refroidi. On remarque que les segments qui forment les viroles 2 et 4 sont ici davantage inclinés vis-à-vis de l'axe XX' que ceux prévus dans la partie haute A. Chaque virole 2, 4 est formée par une succession de segments inclinés dans un sens puis dans l'autre. Les chicanes formées favorisent les échanges thermiques notamment dans la zone B avec condensation où l'on augmente fortement les échanges thermiques au niveau de la virole 2 de l'insert. A ce niveau les fumées viennent impacter ou taper l'insert alors que le corps de chauffe est en dévers c'est-à-dire moins exposé aux vitesses des fumées. L'échange thermique est donc moins important sur le corps de chauffe.

A ce niveau la température de l'eau et celle des fumées sont proches, par exemple autour de 30°C.

A titre illustratif, pour une eau d'alimentation à 30°C, en sortie l'eau atteint environ 60° C voire davantage. En sortie du conduit de transfert 8 la température de l'eau est portée à environ 50 °C. Les fumées produites par le brûleur atteignent 1700°C à la sortie du brûleur 5, et elles sortent de la chaudière à environ 30°C. On optimise les échanges thermiques en maitrisant ces températures de telle sorte que la température d'entrée de l'eau soit proche de celle des fumées en sortie de la chaudière.

La chaudière selon l'invention présente donc des zones sans condensation, les zones repérées A sur la figure 1 ; des zones avec condensation repérées B sur la figure 1 sont en outre présentes.

Sur la figure 1, on a montré par des pointillés 50 et 51 les zones où les échanges thermiques sont les plus importants.

Il est en outre souligné que la chaudière selon un aspect de l'invention comporte un espace central important, proche de son axe longitudinal XX' afin de diminuer le volume d'eau et d'augmenter les vitesses d'eau.

Les matériaux préférés pour les viroles constitutives de l'insert sont l'acier, l'acier inoxydable ou encore l'aluminium. Les épaisseurs des parois sont de l'ordre de 0.7 mm ; la hauteur du corps de chauffe est de l'ordre de 60 cm son diamètre extérieur de l'ordre de 20 cm ; le conduit de transfert 8 peut présenter un diamètre d'environ 2 cm. La section annulaire de passage des fumées est comprise entre 2000 et 3000 mm² dans la zone A sans condensation. Cette section peut être comprise entre 1500 et 2000 mm² dans la zone B avec condensation. La section de passage de l'eau dans l'insert 20, entre les viroles 2 et 3 est comprise entre 1800 et 5000 mm². Au niveau du corps de chauffe 10, entre les viroles 1 et 4, la section de passage de l'eau peut couramment être comprise entre 1800 et 5000 mm², selon l'endroit considéré. Les pertes de charges dans une chaudière ainsi dimensionnée sont de l'ordre de 350 Pa.

L'insert 20 est fixé sur le corps de chauffe 10 par une pièce de liaison (non représentée) disposée en partie basse de la chaudière ; Il est en outre centré vis-à-vis du corps de chauffe par des protubérances de l'insert, orientées radialement, angulairement espacées.

La conduite de transfert 8 est fixée sur l'insert par un raccord connu en lui-même ; cette conduite est fixée sur le cylindre 1 par au moins un raccord. Les diamètres des tuyaux de raccordement sont de l'ordre de 18 mm.

Des modifications de type ergonomiques, économiques ou autres pourront être apportées à l'invention sans pour autant sortir de son cadre

## Revendications

1. Chaudière à condensation comprenant: un corps de chauffe (10) sensiblement cylindrique d'axe longitudinal XX' ayant une première et une deuxième extrémité ; un brûleur (5) disposé à proximité de ladite première extrémité dudit corps de chauffe et générant des fumées dans une chambre de combustion ; un insert (20) sensiblement cylindrique coaxial au corps de chauffe ; au moins un conduit d'alimentation en eau (7) à une température d'entrée débouchant dans l'insert (20) à proximité de la deuxième extrémité du corps de chauffe ; au moins un conduit de sortie de l'eau (9) ayant circulé dans la chaudière et portée à une température supérieure à la température d'entrée, ledit au moins un conduit de sortie (9) débouchant dans le corps de chauffe à proximité de sa première extrémité, l'insert délimitant un espace central libre tel que lesdites fumées circulent de la première extrémité vers la deuxième extrémité à contre-courant de l'eau et avec des échanges thermiques variables et contrôlés selon l'axe longitudinal XX', l'insert (20) comprend au moins une première (2) virole tubulaire coaxiale d'axe longitudinal XX' délimitant un espace pour la circulation de l'eau, dans lequel est prévu au moins un conduit de transfert (8) pour la circulation de l'eau depuis le fond de l'insert jusqu'à l'extérieur dudit corps de chauffe de sorte à créer des échanges thermiques sans condensation sur une zone A proche de ladite première extrémité et des échanges thermiques avec condensation sur une zone B proche de ladite deuxième extrémité, en ledit corps de chauffe (10) comprend une première virole tubulaire (1) dite extérieure de section transversale sensiblement constante et une deuxième virole tubulaire (4) dite intérieure coaxiale à ladite première virole (1), ladite zone A permet des échanges thermiques renforcés sur la deuxième virole (4) du corps de chauffe (10),
**caractérisé en ce que** ladite deuxième virole (4) du corps de chauffe est conformée de telle sorte que la section transversale délimitée entre lesdites viroles (1,4) du corps de chauffe n'est pas constante selon l'axe longitudinal XX', et **en ce que** la première (2) et/ou une deuxième virole(s) (3) de l'insert (20) et/ou la deuxième virole (4) du corps de chauffe comportent une succession de segments inclinés vis-à-vis de l'axe longitudinal XX' et permettent de former des rétrécissements périodiques le long de l'axe longitudinal XX', lesdits segments présentant majoritairement une première inclinaison dans ladite zone A sans condensation et une deuxième inclinaison dans ladite zone B avec condensation.

2. Chaudière selon la revendication 1 **caractérisé en ce que** l'insert (20) comporte une deuxième virole (3) tubulaire coaxiale selon l'axe longitudinal XX' reliée à la première virole (2) par un fond (6) de sorte à délimiter un espace pour la circulation de l'eau.

3. Chaudière selon la revendication 1 **caractérisée en ce que** ladite première extrémité correspond au haut c'est-à-dire à une première altitude dite supérieure de la chaudière et **en ce que** ladite deuxième extrémité correspond au bas c'est-à-dire à une altitude dite inférieure de la chaudière.

4. Chaudière selon l'une quelconque des revendications précédentes **caractérisée en ce que** l'espace annulaire délimité entre la deuxième virole (4) du corps de chauffe et la première virole (2) de l'insert présente une section variable selon l'axe longitudinal XX', ledit espace étant apte à la circulation desdites fumées qui circulent à contre-courant de l'eau et passent successivement à travers la zone (A) sans condensation et la zone (B) avec condensation.

5. Chaudière selon l'une quelconque des revendications précédentes **caractérisée en ce que** la première (2) et/ou la deuxième (3) viroles de l'insert et/ou la deuxième virole (4) du corps de chauffe présentent des formes respectives telles que la section transversale de l'espace annulaire qu'elles délimitent est variable selon l'axe longitudinal XX'.

6. Chaudière selon l'une quelconque des revendications précédentes **caractérisée en ce que** le conduit d'alimentation en eau (7), le conduit de transfert (8) et le conduit de sortie de l'eau (9) sont disposés de telle sorte que l'eau circule dans l'insert successivement dans la zone B avec condensation proche de ladite deuxième extrémité du corps de chauffe, puis dans la zone A sans condensation proche de la première extrémité dudit corps de chauffe.

7. Chaudière selon l'une quelconque des revendications précédentes **caractérisée en ce que** dans le corps de chauffe (10) l'eau circule d'abord dans la zone B avec condensation puis dans la zone A sans condensation.

8. Chaudière selon l'une quelconque des revendications précédentes **caractérisée en ce que** la température des fumées est comprise entre environ 1600°C et environ 1800°C à proximité du brûleur (5).

9. Chaudière selon l'une quelconque des revendications précédentes **caractérisée en ce qu'**au niveau de la deuxième extrémité du corps de chauffe, la température des fumées est proche de la température de l'eau qui entre dans l'insert.

10. Chaudière selon l'une quelconque des revendications précédentes **caractérisée en ce que** la hauteur de l'insert est inférieure d'environ 15% à la hauteur du corps de chauffe.

11. Chaudière selon l'une quelconque des revendications précédentes **caractérisée en ce que** le corps de chauffe et/ou l'insert est réalisé en acier ou en un acier inoxydable ou en aluminium.

12. Chaudière selon l'une quelconque des revendications précédentes **caractérisée en ce que** l'épaisseur des viroles (1, 2, 3, 4) est comprise entre 0.5 et 1 mm.

13. Chaudière selon l'une quelconque des revendications précédentes **caractérisée en ce que** lesdites viroles (2, 3) de l'insert présentent une surépaisseur dans une zone (6) proche du brûleur (5).

## Patentansprüche

1. Ausgleichskessel, der folgendes umfasst: einen im wesentlichen zylindrischen Heizkörper (10) mit der Längsachse XX' mit einem ersten und einem zweiten Ende; einen in der Nähe des ersten Endes des Heizkörpers angeordneten Brenner (5), der in einer Verbrennungskammer Rauch erzeugt; einen im Wesentlichen zylindrischen Einsatz (20) koaxial zum Heizkörper; zumindest eine Wasserversorgungsleitung (7) mit einer Wassereintrittstemperatur, die in den Einsatz (20) in der Nähe des zweiten Endes des Heizkörpers führt; zumindest eine Austrittsleitung für das im Kessel zirkulierende Wasser (99), das auf eine Temperatur gebracht wird, die größer als die Eintrittstemperatur ist, wobei mindestens eine Austrittsleitung (9) in der Nähe des ersten Endes des Heizkörpers in diesen führt, und der Einsatz einen mittigen freien Bereich abgrenzt, sodass der Rauch von dem ersten Ende zum zweiten Ende gegenläufig zum Wasser mit veränderlichem Wärmeaustausch kontrolliert in der Längsachse XX' zirkulieren kann, wobei der Einsatz (20) zumindest einen ersten röhrenförmigen koaxialen Mantel (2) mit der Längsachse XX' umfasst, der einen Bereich für das Zirkulieren des Wassers abgrenzt, in dem zumindest eine Übertragungsleitung (8) für die Zirkulation des Wassers vom Boden des Einsatzes aus dem besagten Heizelement heraus vorgesehen ist, sodass ein Wärmeaustausch ohne Kondensation in einem Bereich A in der Nähe des ersten Endes und ein Wärmeaustausch mit Kondensation in einem Bereich B in der Nähe des zweiten Endes entsteht, wobei der Heizkörper (10) einen ersten äußeren röhrenförmigen Mantel (1) mit im Wesentlichen gleichbleibendem Querschnitt und einen zweiten inneren röhrenförmigen Mantel (4) koaxial zum ersten Mantel (1) umfasst, wobei der Bereich A einen verstärkten Wärmeaustausch auf dem zweiten Mantel (4) des Heizkörpers (10) ermöglicht, **dadurch gekennzeichnet, dass** der zweite Mantel (4) des Heizkörpers so ausgebildet ist, dass der zwischen den Mänteln (1, 4) des Heizkörpers abgegrenzte Querschnitt in der Längsachse XX' nicht gleichbleibend ist, und dadurch, dass der erste (2) und/oder ein zweiter Mantel (3) des Einsatzes (20) und/oder der zweite Mantel (4) des Heizkörpers eine Abfolge von geneigten Segmenten gegenüber der Längsachse XX' umfassen und die Bildung von regelmäßigen Verengungen entlang der Längsachse XX' ermöglichen, wobei besagte Abschnitte mehrheitlich eine erste Neigung in dem Bereich A ohne Kondensation und eine zweite Neigung in dem Bereich B mit Kondensation aufweisen.

2. Kessel nach Anspruch 1, **dadurch gekennzeichnet, dass** der Einsatz (20) einen zweiten röhrenförmigen Mantel (3) koaxial zur Längsachse XX' umfasst und mit dem ersten Mantel (2) über einen Boden (6) verbunden ist, sodass ein Bereich für das Zirkulieren des Wassers abgegrenzt wird.

3. Kessel nach Anspruch 1, **dadurch gekennzeichnet, dass** das erste Ende dem oberen Bereich entspricht, d.h. einer ersten Höhe, die höher ist als der Kessel, und dadurch, dass das zweite Ende dem unteren Bereich entspricht, das heißt, einer Höhe, die niedriger als der Kessel ist.

4. Kessel nach einem der vorhergehenden Ansprüche, **dadurch gekennzeichnet, dass** der ringförmige begrenzte Bereich zwischen dem ersten Mantel (4) des Heizkörpers und dem zweiten Mantel (2) des Einsatzes einen veränderlichen Querschnitt entlang der Längsachse XX' aufweist, wobei sich der Bereich für das Zirkulieren des Rauchs eignet, der gegenläufig zum Wasser zirkuliert und nacheinander durch den Bereich (A) ohne Kondensation und den Zone (B) mit Kondensation strömt.

5. Kessel nach einem der vorhergehenden Ansprüche, **dadurch gekennzeichnet, dass** der erste (2) und/oder der zweite (3) Mantel des Einsatzes und/oder der zweite Mantel (4) des Heizkörpers jeweils so geformt sind, dass der Querschnitt des von ihnen begrenzten ringförmigen Bereichs auf der Längsachse XX' veränderlich ist.

6. Kessel nach einem der vorhergehenden Ansprüche, **dadurch gekennzeichnet, dass** die Wasserversorgungsleitung (7), die Übertragungsleitung (8) und die Wasseraustrittsleitung (9) so angeordnet sind, dass das Wasser im Einsatz zuerst im Bereich B mit Kondensation in der Nähe des zweiten Endes des Heizkörpers, und dann im Bereich A ohne Kondensation in der Nähe des ersten Endes des Heizkörpers zirkuliert.

7. Kessel nach einem der vorhergehenden Ansprüche, **dadurch gekennzeichnet, dass** das Wasser im Heizkörper (10) zunächst im Bereich B mit Kondensation und dann im Bereich A ohne Kondensation zirkuliert.

8. Kessel nach einem der vorhergehenden Ansprüche, **dadurch gekennzeichnet, dass** die Temperatur des Rauches zwischen ungefähr 1600 °C und ungefähr 1800 °C in der Nähe des Brenners (5) umfasst.

9. Kessel nach einem der vorhergehenden Ansprüche, **dadurch gekennzeichnet, dass** die Temperatur des Rauches am zweiten Ende des Heizkörpers eine ähnliche Temperatur hat, wie das in den Einsatz eintretende Wasser.

10. Kessel nach einem der vorhergehenden Ansprüche, **dadurch gekennzeichnet, dass** die Höhe des Einsatzes ungefähr 15 % niedriger ist, als die Höhe des Heizkörpers.

11. Kessel nach einem der vorhergehenden Ansprüche, **dadurch gekennzeichnet, dass** der Heizkörper und/oder der Einsatz aus Stahl oder aus rostfreiem Stahl oder aus Aluminium hergestellt ist.

12. Kessel nach einem der vorhergehenden Ansprüche, **dadurch gekennzeichnet, dass** die Dicke der Mäntel (1, 2, 3, 4) zwischen 0.5 und 1 mm beträgt.

13. Kessel nach einem der vorhergehenden Ansprüche, **dadurch gekennzeichnet, dass** die Mäntel (2, 3) des Einsatzes in einem Bereich (6) in der Nähe des Brenners (5) einer Überdicke aufweisen.

## Claims

1. A condensing boiler comprising : a substantially cylindrical heating body (10) with a longitudinal axis XX' having a first and a second end; a burner (5) positioned close to said first end of said heating body and generating fumes in a combustion chamber; a substantially cylindrical insert (20) coaxial with the heating body; at least one water supply duct (7) at an intake temperature opening into the insert (20) close to the second end of the heating body; at least one water exit duct (9) for the water having circulated inside the boiler and having reached a temperature above the intake temperature, with said at least one exit duct (9) opening into the heating body close to the first end thereof, with the insert defining a free central space so that said fumes can circulate from the first end to the second end, against the stream of water and with variable and controlled heat exchanges along the longitudinal axis XX',
the insert (20) comprises at least one first coaxial tubular shell having a longitudinal axis XX' defining a space for the circulation of water, wherein at least one transfer duct (8) is provided for the circulation of water from the bottom of the insert to the outside of said heating body, so as to create non-condensing heat exchanges on an area A close to said first end and condensing heat exchanges on an area B close to said second end,
said heating body (10) comprises a first so-called outer tubular shell (1) having a substantially constant cross-section and a second so-called inner tubular shell (4) coaxial with said first shell (1),
said area A enabling reinforced heat exchanges on the second shell (4) of the heating body (10),
**characterized in that** said second shell (4) of the heating body is so designed that the cross-section defined between said shells (1, 4) of the heating body is not constant along the longitudinal axis XX', and
**in that** the first (2) and/or a second shell (s) (3) of the insert (20) and/or the second shell (4) of the heating body include(s) a sequence of segments biased relative to the longitudinal axis XX' and make it possible to form periodical necks along the longitudinal axis XX', with said segments mainly having a first bias in said non-condensing area A and a second bias in said condensing area B.

2. A boiler according to claim 1, **characterized in that** the insert (20) includes a second tubular shell (3) coaxial along the longitudinal axis XX' connected to the first shell (2) through a bottom (6) so as to define a space for the circulation of water.

3. A boiler according to claim 1, **characterized in that** said first end corresponds to the top, i.e. a first so-called upper altitude of the boiler and **in that** said second end corresponds to the bottom, i.e. a so-called lower altitude of the boiler.

4. A boiler according to any one of the preceding claims, **characterized in that** the annular space defined between the second shell (4) of the heating body and the first shell (2) of the insert has a section varying along the longitudinal axis XX', with said space being adapted to the circulation of said fumes which flow against the stream of water and successively flow through the non-condensing area (A) and the condensing area (B).

5. A boiler according to any one of the preceding claims, **characterized in that** the first (2) and/or the second (3) shells of the insert and/or the second shell (4) of the heating body have such respective shapes that the cross-section of the annular space they define varies along the longitudinal axis XX'.

6. A boiler according to any one of the preceding claims, **characterized in that** the water supply duct (7), the transfer duct (8) and the water exit duct (9) are so positioned that the water successively flows in the insert through the condensing area B close to said second end of the heating body, then in the condensing area A close to the first end of said heating body.

7. A boiler according to any one of the preceding claims, **characterized in that**, in the heating body (10), water first circulates in the condensing area B then in the non-condensing area A.

8. A boiler according to any one of the preceding claims, **characterized in that** the temperature of the fumes ranges from about 1,600°C to about 1,800°C close to the burner (5).

9. A boiler according to any one of the preceding claims, **characterized in that**, at the second end of the heating body, the temperature of the fumes is close to the temperature of the water entering the insert.

10. A boiler according to any one of the preceding claims, **characterized in that** the height of the insert is lower by about 15% than the height of the heating body.

11. A boiler according to any one of the preceding claims, **characterized in that** the heating body and/or the insert is made of steel or of stainless steel or of aluminum.

12. A boiler according to any one of the preceding claims, **characterized in that** the thickness of the shells (1, 2, 3, 4) ranges from 0.5 to 1mm.

13. A boiler according to any one of the preceding claims, **characterized in that** said shells (2, 3) of the insert have an extra thickness in an area (6) close to the burner (5).
